# DEMANDE DE BREVET EUROPEEN

(11) **EP 2 000 349 A1**
(43) Date de publication de la demande: **10.12.2008**
(21) Numéro de dépôt: 08157311.5
(22) Date de dépôt: 30.05.2008
(51) Int. Cl.: B60N 2/01

(54) **Procédé et dispositif pour garantir l'alignement des dossiers d'un rang de sieges de véhicule**

(30) Priorité: 06.06.2007 FR 0755496
(71) Demandeur: PEUGEOT CITROËN AUTOMOBILES SA, 78140 Velizy-Villacoublay (FR)
(72) Inventeur: Lecombe, Guillaume, 92160, ANTONY (FR)
(74) Mandataire: Vigand, Régis Louis Michel

(57) **Abrégé**

Le procédé s'applique à un rang de sièges de véhicule, en particulier de véhicule automobile, chaque dossier (10, 20) comportant une paire de fourreaux (11, 12 ; 21, 22) pour l'introduction des tiges d'un appui-tête. Le procédé comporte les étapes suivantes :
- les dossiers (10, 20) sont alignés dans l'usine du fournisseur de sièges, par insertion d'un dispositif d'alignement (1) rigide dans lesdits fourreaux destinés aux tiges des appuis-tête,
- les sièges sont transportés, avec le dispositif d'alignement (1) ainsi inséré dans les dossiers (10, 20), de l'usine du fournisseur de sièges à l'usine de fabrication du véhicule, et
- une fois les sièges du rang fixés sur le véhicule, le dispositif d'alignement (1) est retiré.
- Véhicules automobiles. Assemblage des sièges et banquettes des véhicules automobiles.

## Description

La présente invention concerne un procédé et un dispositif pour garantir l'alignement des dossiers d'un rang de sièges de véhicule, en particulier de véhicule automobile.

Les dossiers des assises d'un même rang, par exemple les dossiers d'une banquette avant ou d'une banquette arrière, d'un véhicule peuvent présenter des défauts d'alignement, qui entraînent alors des retours en usine dits « retours qualité », économiquement préjudiciables au constructeur du véhicule.

Il y a, par conséquent, nécessité de perfectionner l'assemblage des dossiers pour en garantir l'alignement au montage.

Le but de la présente invention est de fournir un procédé et un dispositif pour répondre à cette nécessité, c'est-à-dire garantir un bon alignement des dossiers d'un rang de sièges de véhicule.

Un autre but de la présente invention est de fournir un tel dispositif pour garantir l'alignement, qui soit de conception simple, de mise en oeuvre facile, qui soit robuste, fiable et économique, et qui assure le meilleur alignement possible.

Pour parvenir à ces buts, la présente invention conçoit un nouveau procédé pour garantir l'alignement des dossiers d'un rang de sièges de véhicule, en particulier de véhicule automobile, chaque dossier comportant une paire de fourreaux pour l'introduction des tiges d'un appui-tête, ledit nouveau procédé comportant les étapes suivantes :
- les dossiers sont alignés dans l'usine du fournisseur de sièges, par insertion d'un dispositif d'alignement rigide dans lesdits fourreaux destinés aux tiges des appuis-tête,
- les sièges sont transportés, avec le dispositif d'alignement ainsi inséré dans les dossiers, de l'usine du fournisseur de sièges à l'usine de fabrication du véhicule, et
- une fois les sièges du rang fixés sur le véhicule, le dispositif d'alignement est retiré.

Selon un mode préféré de réalisation de l'invention, le dispositif d'alignement ayant été retiré après fixation des sièges sur le véhicule, il est renvoyé dans l'usine du fournisseur de sièges pour être réutilisé.

La présente invention concerne également un dispositif d'alignement pour la mise en oeuvre du procédé décrit ci-dessus dans ses grandes lignes. Ce nouveau dispositif est constitué d'inserts rigides, co-planaires, en nombre égal au nombre de sièges du rang et reliés par un entraxe rigide, chaque insert comprenant deux tiges destinées à être introduites dans les deux fourreaux d'appui-tête d'un dossier de siège, de telle façon que les dossiers soient alignés.

De préférence, chaque insert présente une forme de « U » inversé dont les branches sont destinées à être introduites dans les deux fourreaux d'appui-tête d'un dossier.

Selon une variante de réalisation avantageuse de la présente invention, l'entraxe rigide est de longueur réglable, de façon à s'adapter à la configuration des sièges du rang.

De préférence, au moins une branche d'un insert du dispositif d'alignement présente un crantage pour le verrouillage du dispositif d'alignement sur le rang de sièges.

De préférence également, l'entraxe relie les points milieu des inserts.

Selon un mode particulier de réalisation de l'invention, les inserts sont au nombre de deux, le dispositif d'alignement étant destiné à garantir l'alignement des dossiers d'un rang de deux sièges de véhicule.

Le rang de sièges de véhicule peut être une banquette avant ou une banquette arrière.

De préférence, le dispositif d'alignement de l'invention est réalisé en métal.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue frontale, en perspective, illustrant le risque de désalignement de dossiers d'une même rangée de sièges de véhicule en l'absence d'utilisation d'un dispositif conforme à la présente invention,
- la figure 2 est une vue frontale du dispositif permettant de garantir l'alignement des dossiers d'un même rang de sièges, selon la présente invention, et
- la figure 3 est une vue frontale, en perspective, du dispositif de la figure 2, en situation de maintien d'alignement de deux dossiers d'une même rangée de sièges d'un véhicule.

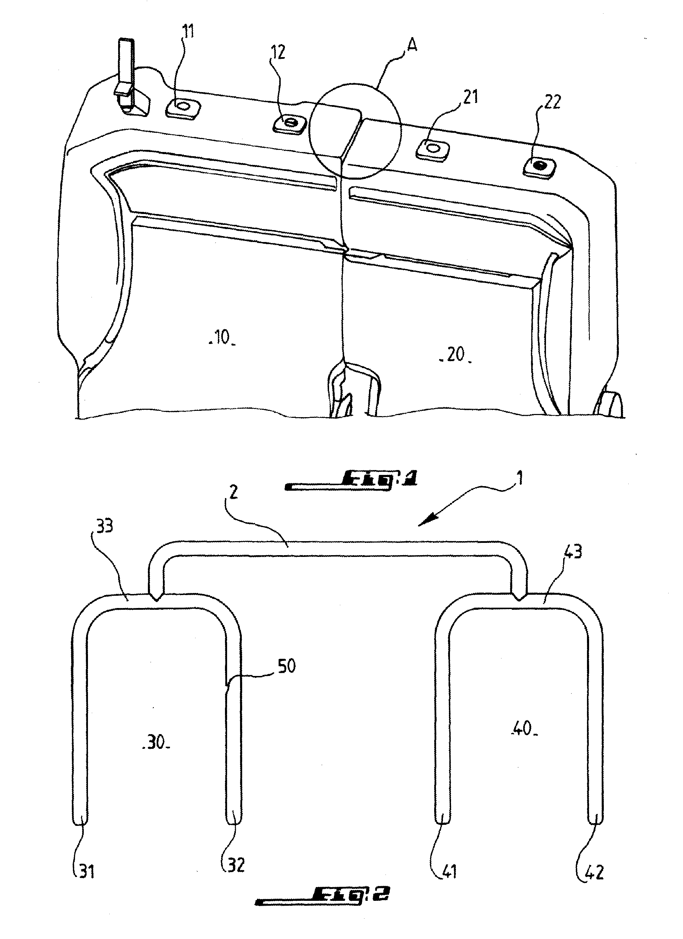

En référence au dessin de la figure 1, deux dossiers, 10 et 20, d'une banquette avant ou d'une baquette arrière automobile sont représentés avec un mauvais alignement illustré en A. Comme déjà mentionné ci-dessus, ce problème d'alignement - ou d'indexage - d'un dossier par rapport à l'autre peut entraîner un retour « qualité » du véhicule pour retouche.

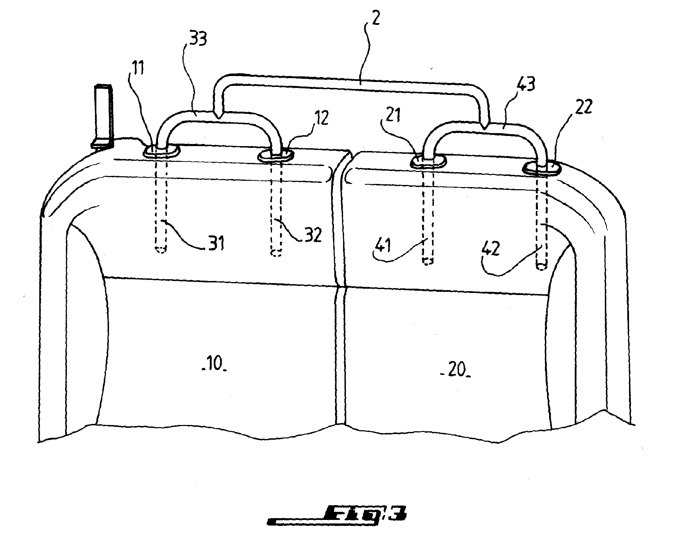

La présente invention vise à surmonter ce problème d'alignement. A cette fin, en référence également aux figures 2 et 3, on procédé de la manière suivante :
- on aligne les dossiers 10 et 20 d'un rang de sièges du véhicule dans l'usine du fournisseur de sièges, par insertion d'un dispositif d'alignement rigide, de référence générale 1, dans les fourreaux 11, 12, et 21, 22 des dossiers 10 et 20 (figure 1), lesdits fourreaux étant les fourreaux destinés à l'insertion des tiges des appuis-tête (non représentés),
- on transporte les sièges, avec le dispositif d'alignement rigide 1 ainsi inséré dans les fourreaux 11, 12, et 21, 22, des dossiers 10 et 20, respectivement, de l'usine du fournisseur de sièges à l'usine de fabrication du véhicule, et
- lorsque les sièges du rang sont fixés sur le véhicule dans l'usine de fabrication du véhicule, on retire le dispositif d'alignement rigide 1.

Le dispositif d'alignement rigide 1 ayant été retiré après fixation des sièges sur le véhicule, il est renvoyé en usine fournisseur de sièges pour être réutilisé.

En référence encore aux dessins des figures 2 et 3, on va maintenant décrire le dispositif d'alignement rigide 1 selon la présente invention.

Le dispositif d'alignement 1 est constitué de deux inserts 30, 40, rigides, co-planaires, reliés par un entraxe rigide 2. Chaque insert 30, 40, présente une forme de « U » inversé et comprend deux tiges 31, 32, respectivement 41, 42, destinées à être introduites dans les fourreaux d'appui-tête d'un dossier de siège, de telle façon que les dossiers soient alignés selon le plan unique des inserts. Ainsi, comme représenté sur le dessin de la figure 3, les deux branches 31 et 32 de l'insert 30 sont montées en lieu et place des tiges d'appui-tête dans les fourreaux 11 et 12 du dossier 10, et les deux branches 41 et 42 de l'insert 40 sont montées en lieu et place des tiges d'appui-tête dans les fourreaux 21 et 22 du dossier 20.

La longueur de l'entraxe rigide 2 est de longueur appropriée à la largeur et à la configuration des deux dossiers 10 et 20. L'entraxe 2 peut être construit avec une longueur réglable, de façon à s'adapter à la configuration de sièges du rang.

Comme représenté sur le dessin de la figure 2, une branche d'un insert du dispositif 1, par exemple la branche 32 de l'insert 30, présente un crantage 50 pour le verrouillage du dispositif 1 sur le rang de sièges dont les dossiers sont à aligner.

Dans l'exemple décrit ci-dessus et représenté sur les figures, le dispositif d'alignement 1 est destiné à garantir l'alignement de deux dossiers 10, 20, et comporte par conséquent, deux inserts 30, 40, reliés par un entraxe 2 qui relie les points milieu des parties sensiblement horizontales 33, respectivement 43, des inserts 30, respectivement 40. Les deux dossiers 10, 20, peuvent être les dossiers de deux sièges d'un même rang de véhicule, ou les deux dossiers d'une banquette avant ou d'une banquette arrière de véhicule.

Le dispositif d'alignement 1 de dossiers de sièges d'un même rang peut mutatis mutandis s'appliquer à un nombre différent de dossiers de siège à aligner.

Dans tous les cas, le dispositif de la présente invention, pour être rigide, est réalisé, de préférence, en un matériau métallique.

La présente invention présente de nombreux avantages, parmi lesquels les avantages suivants :
- elle garantit parfaitement le positionnement des armatures de siège, parce qu'il est monté lors de l'assemblage des sièges sur le site de fabrication du fournisseur de sièges et retiré uniquement après l'assemblage final en usine terminale,
- elle garantit parfaitement l'alignement des dossiers de siège en utilisant des moyens existants de l'armature (fourreaux d'appui-tête) et, par conséquent, sans avoir à créer des interfaces spécifiques pour maintenir l'alignement,
- elle permet de supprimer un grand nombre de retouches liées au problème d'indexage d'un dossier par rapport à l'autre.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Procédé pour garantir l'alignement des dossiers (10, 20) d'un rang de sièges de véhicule, en particulier de véhicule automobile, chaque dossier (10 ; 20) comportant une paire de fourreaux (11, 12 ; 21, 22) pour l'introduction des tiges d'un appui-tête, **caractérisé par** les étapes suivantes :
- les dossiers (10, 20) sont alignés dans l'usine du fournisseur de sièges, par insertion d'un dispositif d'alignement (1) rigide dans lesdits fourreaux (11, 12 ; 21, 22) destinés aux tiges des appuis-tête,
- les sièges sont transportés, avec ledit dispositif d'alignement (1) ainsi inséré dans les dossiers (10, 20), de l'usine du fournisseur de sièges à l'usine de fabrication du véhicule, et
- une fois lesdits sièges du rang fixés sur le véhicule, le dispositif d'alignement (1) est retiré.

2. Procédé selon la revendication 1, **caractérisé en ce que**, le dispositif d'alignement (1) ayant été retiré après fixation des sièges sur le véhicule, il est renvoyé dans l'usine du fournisseur de sièges pour être réutilisé.

3. Dispositif pour garantir l'alignement des dossiers (10, 20) d'un rang de plusieurs sièges de véhicule, en particulier de véhicule automobile, pour la mise en oeuvre du procédé conforme à l'une quelconque des revendications 1 et 2, **caractérisé en ce qu'**il est constitué d'inserts (30, 40), rigides, co-planaires, en nombre égal au nombre de sièges du rang et reliés par un entraxe (2) rigide, chaque insert (30 ; 40) comprenant deux tiges (31, 32 ; 41, 42) destinées à être introduites dans les deux fourreaux (11, 12 ; 21, 22) d'appui-tête d'un dossier (10 ; 20) de siège, de telle façon que les dossiers (10, 20) soient alignés selon le plan unique des inserts.

4. Dispositif selon la revendication 3, **caractérisé en ce que** chaque insert (30 ; 40) présente une forme de « U » inversé dont les branches (31, 32 ; 41, 42) sont destinées à être introduites dans les deux fourreaux (11, 12 ; 21, 22) d'appui-tête d'un dossier.

5. Dispositif selon l'une quelconque des revendication 3 et 4, **caractérisé en ce que** ledit entraxe (2) rigide est de longueur réglable, de façon à s'adapter à la configuration des sièges du rang.

6. Dispositif selon l'une quelconque des revendications 3 à 5, **caractérisé en ce qu'**une branche (32) d'un insert (30) du dispositif d'alignement (1) présente un crantage (50) pour le verrouillage du dispositif d'alignement (1) sur le rang de sièges.

7. Dispositif selon l'une quelconque des revendication 3 à 6, **caractérisé en ce que** ledit entraxe (2) relie les points milieu des inserts (30, 40).

8. Dispositif selon l'une quelconque des revendications 3 à 7, **caractérisé en ce que** les inserts (30, 40) sont au nombre de deux, le dispositif d'alignement (1) étant destiné à garantir l'alignement des dossiers (10, 20) d'un rang de deux sièges de véhicule.

9. Dispositif selon l'une quelconque des revendications 3 à 8, **caractérisé en ce que** le rang de sièges de véhicule est une banquette avant ou une banquette arrière.

10. Dispositif selon l'une quelconque des revendications 3 à 9, **caractérisé en ce que** le dispositif d'alignement (1) est réalisé en métal.
